# EUROPEAN PATENT SPECIFICATION

(11) **EP 0 765 525 B1**
(45) Date of publication and mention of the grant of the patent: **13.01.1999**
(21) Application number: 95915818.9
(22) Date of filing: 05.04.1995
(51) Int. Cl.: H01B 7/28, H01B 9/02

(54) **A POWER CABLE HAVING AN AXIAL AND A RADIAL WATER SEAL**
ELEKTRISCHES KABEL MIT AXIALER UND RADIALER WASSERABDICHTUNG
CABLE D'ALIMENTATION A JOINT D'ETANCHEITE AXIAL ET RADIAL

(30) Priority: 05.04.1994 NO 941213
(43) Date of publication of application: 02.04.1997
(73) Proprietor: NKT Cables A/S, 2605 Bröndby (DK)
(72) Inventor: DAHL, Flemming, DK-9370 Hals (DK)
(74) Representative: Wittrup, Flemming
(86) International application number: DK9500146
(87) International publication number: WO9527290

(56) References cited:
- EP-A- 0 601 667
- DE-A- 2 719 094
- DE-A- 3 345 221
- DE-C- 2 807 767
- FR-A- 2 378 337
- FR-A- 2 503 441

## Description

The invention concerns a power cable of the type defined in the introductory portion of claim 1.

Power cables of this type are provided with one or more centrally arranged conductors which are covered with various forms of insulation material. A conductive metal screen, which is to ensure a zero potential on the insulation screen of the cable, is arranged externally on the insulation material. An insulating plastics sheath is arranged externally on the conducting screen. A hygroscopic material, either in the form of swellable powder or swellable tape, is provided between the external plastics sheath and the conducting screen. This material prevents water from spreading in the longitudinal direction of the cable, since the material, when contacting water, swells and blocks further spreading of the water. Thus, water penetrating into the cable at its terminal points cannot spread through the cable or at any rate only at a quite low rate, so that just cable sections positioned in the immediate vicinity of the terminal point will be destroyed by penetrating water.

However, at present it is not possible to manufacture external plastics sheaths, which present a total seal against water, and accordingly an aluminium sheet is provided inside the plastics sheath. This aluminium sheet forms a closed tube in the entire length of the cable. This aluminium tube has to be short-circuited with the longitudinal screen of the cable at quite short intervals in the longitudinal direction of the cable, since, otherwise, a potential will be formed on the aluminium tube induced by the current running in the cable, involving a risk of break down. The voltage induced on the aluminium tube can assume values up to several hundred volts, even though the power cable is only used in the medium voltage range, i.e. from 1-36 kV. The problem will be particularly pronounced in case of standing earth faults, since the cable may be burned at several points owing to huge voltage differences.

It has been attempted to provide this desired short circuit between the radial, metallic water barrier and a metal screen of the cable in several different ways. Thus, it has been attempted to weave conducting wire into the swellable tapes used. These woven wires or filaments provide a certain contact between the water barrier and the screen of the cable. However, it is desirable to create a safer contact with larger contact points.

However, the prior art has not been capable of teaching a solution to this problem, and the object of the invention is therefore to provide a power cable which ensures a good and reliable contact between the metal screen and conducting water barriers of the cable.

This object is achieved as stated in the characterizing portion of claim 1, the contact being provided by a member which extends in the longitudinal direction of the cable and is positioned alternately below and externally on the helically arranged swellable tapes.

When the swellable tapes are wound helically, the conducting member may be arranged e.g. in parallel with the axis of the cable and alternately be wound inwardly below or externally on the swellable tape. The conducting member will hereby alternately be in contact with the screen and the conducting water barriers of the cable. Alternatively, the conducting member may be provided as a metal tape which is arranged in and around the helical overlap area between two adjacent lengths of the swellable tape. This provides a continous connection betwen the screen of the cable and the conducting water barrier.

The invention will be described more fully below in connection with preferred embodiments and with reference to the drawing, in which:
fig. 1 shows a preferred embodiment of a power cable according to the invention; and
fig. 2 shows an alternative embodiment of a power cable according to the invention.

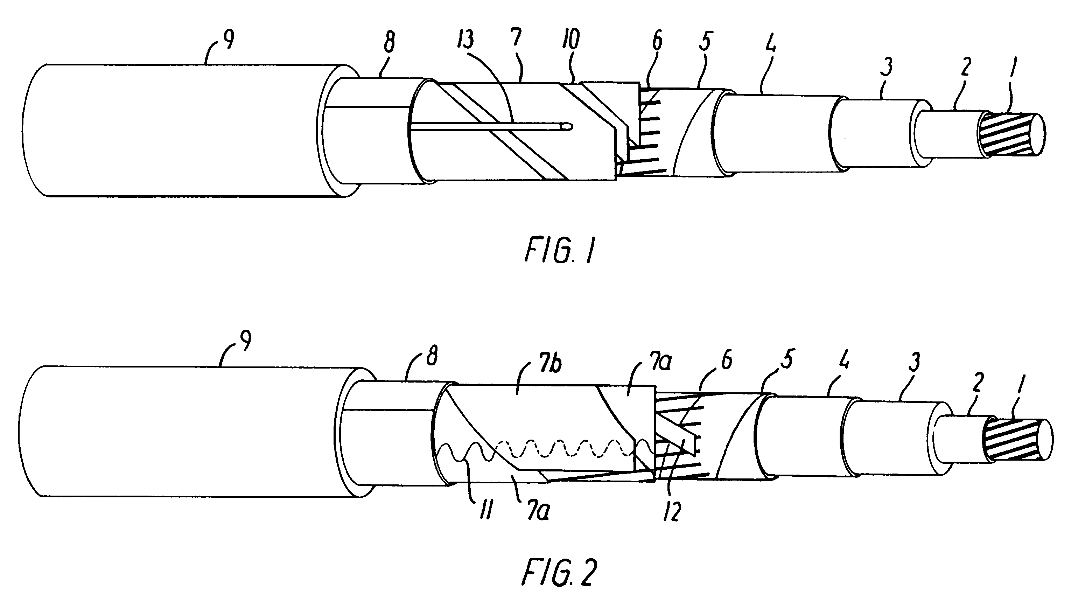

Fig. 1 shows the structure of a preferred embodiment of a power cable according to the invention, and it will be seen that the power cable has a central conductor 1 which will preferably be made of twisted copper or aluminium wires, thereby imparting desired flexibility to the conductor. In the preferred embodiment, the cable is used in the medium voltage range, which means up to 36 kV, and the lower part of the high voltage range, which means up to 72 kV.

A conductor screen in the form of a semi-conducting layer made of cross-linked polyethylene is provided externally on the conductor 1. An insulator 3 is provided externally on the conductor screen 2 and is made of insulating cross-linked polyethylene. An insulation screen 4 consisting of semi-conducting, cross-linked polyethylene is provided externally on the insulator 3. Preferably, the polyethylene layers are manufactured by one and the same extrusion process so that it is provided by a tripple extrusion. The conductor screen 2 provides a smooth and perfectly conducting surface for the conductor 1, thereby creating a homegenous field in the insulation. The radiating electro-magnetic field from the conductor 1 and the conductor screen 2 form a charge current in the insulation screen 4.

A radial water seal 5 in the form of a semi-conducting swellable tape is provided externally on the insulation screen 4. The water seal 5 may be provided by a helically wound semi-conducting swellable tape. To ensure better electric contact between the insulation screen 4 and a screen 6 arranged externally on the insulation screen, the helical swellable tape layer, e.g. a non-woven one, will be twisted together with a corresponding helical carbon tape, which takes place in the same manner as will be described in connection with the water seal 7.

A cable screen 6, which e.g. consists of copper wires, is provided externally on the water seal 5. The distance between these copper wires circumferentially is selected such that electrically the screen 6 is contiguous. The copper screen 6 keeps the potential on the semi-conducting insulator screen at zero and can carry fault or short-circuit currents. Thus, the copper screen 6 serves as a labour protection during digging operations.

A water seal layer 7 is provided externally on the screen 6, said layer preventing axial spreading of water along the cable. This water seal layer 7 consists of a swellable tape wound helically. Two swellable tapes are provided in the embodiment in fig. 1, offset with respect to each other and wound with such a pitch as to cover the entire periphery of the cable and overlap each other in the boundary areas. A conductive metal member 10 in the form of a metal tape e.g. of copper is arranged in these overlapping areas in the embodiment shown in fig. 1. A radial water obstruction in the form of a folded aluminium sheet 8 is provided externally on the axial water seal layer 7, since the external sheath of power cables, such as the sheath 9 made of polyethylene, do not exhibit a totally certain water obstruction. This radial water obstruction is thus provided by the aluminium sheath 8, and this is coated with polyethylene glue on the outer side to ensure certain adhesion to the sheath 9. The conducting metal tapes 10 ensure good electric contact between the screen 6 of the cable and the aluminium sheet 8. This good electric contact is provided without this being detrimental to the water blocking properties of the swellable tapes 7 in the axial direction.

If the screen 6 and the aluminium sheet 8 were insulated with respect to each other, a potential would be formed on the aluminium sheet 8 as a consequence of the current running in the screen 6 and in the conductor 1. This would involve a risk of break down to earth. The potential on the aluminium sheath might assume values of several hundred volts, and the risk of break down would be particularly pronounced in case of standing earth faults because of great currents in the cable, and the cable might be burned at several locations. The conducting member 10, which, as mentioned, may e.g. be a copper tape, short-circuits, the screen 6 and the aluminium sheet 8, so that in reality this forms part of the screen 6 electrically and can be included in the cross-section of said screen.

A longitudinal swellable string 13 is arranged in the longitudinal direction of the cable and prevents water from spreading between the aluminium sheet 8 and the metal member 10.

Fig. 2 shows an alternative embodiment with respect to the one shown in fig. 1; however, the cable is by and large constructed as explained above. The only difference is thus that the conducting member is not provided as a helical metal tape, but is now a longitudinal wire 11. The wire 11 may e.g. be of copper and is wound between the swellable tape lengths 7 in such a manner that the copper wire 11 is alternately positioned externally on and below the swellable tape lengths. In contrast to the embodiment shown in fig. 1 in which the two swellable tape lengths were laid simultaneously, the prior art shown in fig. 2 requires that the swellable tape length 7b to be applied after the swellable tape lengths 7a have been applied, the swellable tape length 7b being the upper one in all overlappping areas. This makes it necessary that the swellable tape length 7a is at least one winding ahead of the swellable tape length 7b in the winding operation. Further, the copper wire 11 is laid externally on the swellable tape length 7a so as to be subsequently covered by the swellable tape length 7b. The copper wire 11 will thus be in contact with the screen 6 below the swellable tape length 7b and with the diffusion sealing aluminium sheet 8 over the swellable tape length 7a. The screen 6 is also provided with a copper tape 12 which is wound with another (smaller) pitch than the copper wires in the screen. Thus, the copper tape 12 short-circuits the screen 6 in the annular direction, which was done with the metal length 10 in the embodiment shown in fig. 1.

As will be seen from fig. 2, the copper wire 11 is wave-shaped or corrugated, which ensures that the wire 11 does not break when the cable is bent.

The power cable of the invention will preferably be used in connection with medium voltages and the lower part of the high voltage range, as use below 3 kV will hardly be of interest since so low voltages do not require screening.

An important feature of the invention is that the principle used for connecting the metal screen 6 to the aluminium sheet 8 electrically ensures continued contact under thermal changes of volume.

It would also be possible to use other embodiments to provide the electric contact between the screen 6 and the aluminium sheet 8, it being contemplated to apply a net stocking externally on the swellable tape length 7a in fig. 2, said swellable tape lengths 7b then subsequently ensuring the continuity of the hygroscopic material. The essential feature of the invention is that the hygroscropic material is provided by a helically wound tape and that a conducting member is combined with the hygroscopic tape to establish good electric connection between a longitudinal metal screen and the diffusion barrier. This connection is established in that the conducting member extends through the overlapping areas of the lengths.

## Claims

1. A power cable having one or more electric conductors (1), a longitudinal metal screen (6) and a radial, metallic barrier (8) to seal against penetrating water, a water blocking layer (7) of a hygroscopic material in the form of a helically wound tape being provided between the longitudinal metal screen (6) and the metallic barrier (8) to prevent water from spreading in the longitudinal direction of the cable, **characterized** in that an electrically conducting member (10, 11) extending in the longitudinal direction of the cable is combined with the wound hygroscopic tape so as to being alternately positioned below and externally on the helically wound tape, thereby establishing a good electric connection between the longitudinal metal screen (6) and the radial, metallic barrier (8).

2. A power cable according to claim 1, **characterized** in that the hygroscopic tape material layer (7) is wound helically so that two adjacent lengths precisely overlap each other.

3. A power cable according to claim 2, **characterized** in that the hygroscopic tape material layer (7) is provided by two offset, helically wound tapes (7a, 7b) so that the length of one tape precisely fills the gab between the length of the other tape.

4. A power cable according to claim 2 or 3, **characterized** in that the electrically conducting member (10; 11) is in the shape of an electrically conducting tape (10) which is wound helically around the cable and is positioned in the area where the adjacent lengths of the hygroscopic tape material layer (7) overlap each other so that part of the electrically conducting member (10) is positioned externally on and part of the electrically member is positioned below the hygroscopic tape material layer (7).

5. A power cable according to claim 2 or 3, **characterized** in that the electrically conducting member (10; 11) is in the form of a wire (11).

6. A power cable according to claim 5, **characterized** in that the electrically conducting wire (11) is stretchable, it being corrugated or wave-shaped.

7. A power cable according to claims 1-6, **characterized** in that the electrically conducting screen (6) is provided with copper wires which are wound helically around a cable, and that the copper wires are electrically connected to each other through a copper tape (12) which is wound with a smaller pitch than the copper wires.

## Patentansprüche

1. Elektrisches Kabel mit einem oder mehreren Stromleitern (1), einer längs verlaufenden Metallabschirmung (6) und einer radialen metallischen Barriere (8) zur Abdichtung gegen eindringendes Wasser, wobei eine Wasserblockierlage (7) aus einem hygroskopischen Material in Form eines helixförmig gewickelten Bandes zwischen der längs verlaufenden Metallabschirmung (6) und der metallischen Barriere (8) vorgesehen ist, um zu verhindern, daß sich Wasser in Längsrichtung des Kabels ausbreitet, dadurch gekennzeichnet, daß ein elektrisch leitendes Element (10, 11), das sich in Längsrichtung des Kabels erstreckt, mit dem gewickelten hygroskopischen Band kombiniert ist, so daß es abwechselnd unter dem helixförmig gewickelten Band und außen auf diesem angeordnet ist, wodurch eine gute elektrische Verbindung zwischen der längs verlaufenden Metallabschirmung (6) und der radialen metallischen Barriere (8) gebildet wird.

2. Elektrisches Kabel nach Anspruch 1, dadurch gekennzeichnet, daß die hygroskopische Bandmateriallage (7) helixförmig so gewickelt ist, daß sich zwei benachbarte Längen gegenseitig genau überlappen.

3. Elektrisches Kabel nach Anspruch 2, dadurch gekennzeichnet, daß die hygroskopische Bandmateriallage (7) durch zwei gegeneinander versetzte helixförmig gewickelte Bänder (7a, 7b) vorgesehen ist, so daß die Länge von einem Band den Zwischenraum zwischen der Länge des anderen Bandes genau ausfüllt.

4. Elektrisches Kabel nach Anspruch 2 oder 3, dadurch gekennzeichnet, daß das elektrisch leitende Element (10; 11) in Form eines elektrisch leitenden Bandes (10) vorliegt, das helixförmig um das Kabel gewickelt ist und in dem Bereich angeordnet ist, wo sich die benachbarten Längen der hygroskopischen Bandmateriallage (7) gegenseitig überlappen, so daß ein Teil des elektrisch leitenden Elementes (10) außen auf der hygroskopischen Bandmateriallage (7) angeordnet ist und ein Teil des elektrischen Elementes unter derselben angeordnet ist.

5. Elektrisches Kabel nach Anspruch 2 oder 3, dadurch gekennzeichnet, daß das elektrisch leitende Element (10; 11) in Form eines Drahtes (11) vorliegt.

6. Elektrisches Kabel nach Anspruch 5, dadurch gekennzeichnet, daß der elektrisch leitende Draht (11) dehnbar ist, wobei er gerippt oder wellenförmig ist.

7. Elektrisches Kabel nach den Ansprüchen 1-6, dadurch gekennzeichnet, daß die elektrisch leitende Abschirmung (6) mit Kupferdrähten versehen ist, die helixförmig um ein Kabel gewickelt sind, und daß die Kupferdrähte durch ein Kupferband (12) elektrisch miteinander verbunden sind, das mit einer kleineren Steigung als die Kupferdrähte gewickelt ist.

## Revendications

1. Câble électrique ayant un ou plusieurs conducteurs électriques (1), un blindage métallique longitudinal (6) et une barrière métallique radiale (8) pour assurer l'étanchéité à l'encontre de la pénétration d'eau, une couche de blocage d'eau (7) constituée d'un matériau hygroscopique, ayant la forme d'un ruban enroulé en hélice, étant agencée entre le blindage métallique longitudinal (6) et la barrière métallique (8) pour empêcher l'eau de diffuser dans la direction longitudinale du câble, caractérisé en ce qu'un élément électriquement conducteur (10, 11) s'étendant dans la direction longitudinale du câble est combiné avec le ruban hygroscopique enroulé de manière à être positionné alternativement en dessous et à l'extérieur du ruban enroulé en hélice, établissant ainsi une bonne liaison électrique entre le blindage métallique longitudinal (6) et la barrière métallique radiale (8).

2. Câble électrique selon la revendication 1, caractérisé en ce que la couche de matériau de ruban hygroscopique (7) est enroulée en hélice de sorte que deux longueurs adjacentes se recouvrent l'une l'autre avec précision.

3. Câble électrique selon la revendication 2, caractérisé en ce que la couche de matériau de ruban hygroscopique (7) est fournie par deux rubans enroulés en hélice, décalés (7a, 7b) de sorte que la longueur d'un premier ruban remplit précisément l'espace existant entre les longueurs de l'autre ruban.

4. Câble électrique selon la revendication 2 ou 3, caractérisé en ce que l'élément électriquement conducteur (10, 11) a la forme d'un ruban électriquement conducteur (10) qui est enroulé en hélice autour du câble et est positionné dans la zone où les longueurs adjacentes de la couche de matériau de ruban hygroscopique (7) se recouvrent l'une l'autre de sorte qu'une partie de l'élément électriquement conducteur (10) est positionnée à l'extérieur de la couche de matériau de ruban hygroscopique (7) et une partie de l'élément électriquement conducteur est positionnée en dessous de la couche de matériau de ruban hygroscopique (7).

5. Câble électrique selon la revendication 2 ou 3, caractérisé en ce que l'élément électriquement conducteur (10, 11) a la forme d'un fil (11).

6. Câble électrique selon la revendication 5, caractérisé en ce que le fil électriquement conducteur (11) peut être étiré, étant ondulé ou en forme d'onde.

7. Câble électrique selon l'une quelconque des revendications 1 à 6, caractérisé en ce que le blindage électriquement conducteur (6) est fourni par des fils de cuivre qui sont enroulés en hélice autour d'un câble, et en ce que les fils de cuivre sont électriquement reliés les uns aux autres par l'intermédiaire d'un ruban de cuivre (12) qui est enroulé avec un pas plus petit que les fils de cuivre.
